# EUROPEAN PATENT APPLICATION

(11) **EP 1 655 664 A2**
(43) Date of publication of application: **10.05.2006**
(21) Application number: 05108119.8
(22) Date of filing: 05.09.2005
(51) Int. Cl.: G06F 9/44

(54) **System and method for managing a floating window**

(30) Priority: 06.10.2004 EP 04300660
(71) Applicant: IBM Corporation, Armonk, NY 10504 (US)
(72) Inventor: Bauchot, Frederic, 06640, Saint-Jeannet (FR); Collet, Jean-Luc, 06610, La Gaude (FR); Fiammante, Marc, 06700, Saint Laurent du Var (FR); Marmigere, Gerard, 06340, Drap (FR); Picon, Joaquin, 06700, St Laurent du Var (FR)
(74) Representative: Etorre, Yves Nicolas

(57) **Abstract**

The present invention is directed to a system, method and computer program for managing a floating window on a computer screen according to its relative position with an active window associated with a computer application, so that the active window remains totally or partially visible on the computer screen. When the floating window partially or totally overlaps the active window, the floating window is either moved, or resized or hidden. The floating window can be restored to its initial size and position on the computer screen as soon as the initial floating window does not partially or totally hides the active window any more. In a particular embodiment, when the cursor hits the front end window, this front end window is automatically moved to keep the text that is being entered visible. To do this, a daemon spies and tracks all the user input activities such as the mouse and the keyboard inputs.

## Description

### Field of the invention

The present invention relates to the display of information on computer screens and more particularly to a method and system for managing a floating window on a computer screen.

### Background of the invention

### Background art

Some application sets attribute to keep the windows in the foreground even when the windows are not active. This is particularly interesting when for instance, a user needs to monitor an activity on a particular application (such as the connection to a network) while working on an other application. However, the fact that a given window stays in the foreground (this kind of window will be called "Floating window in the present description) even when it is not active, has some drawbacks. A floating window may partially or totally hide the active window and mask therefore interesting parts of the active window. In this case the user has some solutions such as moving the floating window in an area which does not overlap the active window. The user has also the possibility to resize the floating window to see the interesting parts of the active window. However these actions are not always convenient if, for instance, the user is entering text while the active window is in full screen mode and one or more floating windows are opened. In this case, the typed text or cursor may be hidden by the floating window. Some solutions exist but need to be implemented in the application which manages the active window. One of the solutions proposed by the company APPLE, is the use of a procedure which sets the cursor appropriately, depending on whether a document window or modeless dialogue box is active or not. This solution has a drawback as all applications have to implement and call this procedure.

### Problem

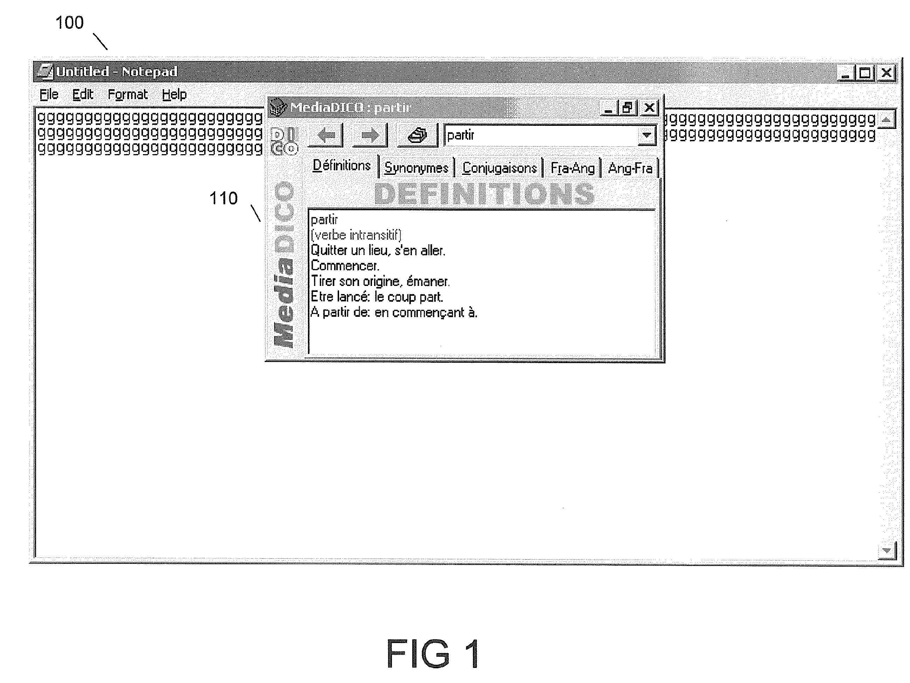

For some applications, it is interesting to keep the window associated with the application visible even when the focus is on a different application window. In the example illustrated in Figure 1, the window corresponding to the dictionary application remains visible even when the user enters data on a different application (e.g Notepad application).

The problem is that the cursor and the text that is being entered on the screen disappear behind the window of the front end application. This situation remains until the cursor leaves the front end application area. In such a situation, the user needs to close or move the front end window to see the cursor and text that is being entered.

### Objects of the invention

The main object of the present invention is to move or minimise a floating window when the cursor belonging to the window of an active application is going to be masked or is masked by a floating window.

An other object of the present invention is to move or minimise a floating window when this window partially or totally hides an active window.

An other object of the invention is to move or restore a floating window to its initial position as soon as this window does not impact any more the active window.

### Summary of the invention

The present invention is directed to a system, method and computer program as defined in independent claims for managing a floating window on a computer screen according to its relative position with an active window associated with a computer application, so that the active window remains totally or partially visible on the computer screen.

Further embodiments of the invention are provided in the appended dependent claims.

When the floating window partially or totally hides the active window, the floating window is either moved, or resized or removed. The floating window is restored to its initial size and position on the computer screen as soon as the initial floating window does not partially or totally hide the active window any more.

In a particular embodiment, when the cursor hits the front end window, this front end window is automatically moved to keep the text that is being entered visible. To do this, a daemon spies and tracks all the user input activities such as the mouse and the keyboard inputs.
one of the advantages of the invention is to avoid any modification to applications running in the system.

The foregoing, together with other objects, features, and advantages of this invention can be better appreciated with reference to the following specification, claims and drawings.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
Figure 1 illustrates an example where the window corresponding to a dictionary application remains visible even when the user enters data on a different application (e.g Notepad application).
**Figure 2** shows the basic principles of the invention.
**Figure 3** describes the Topmost Window Table according to the present invention.
**Figure 4** is a flow chart showing the different steps of the method according to the present invention.
• **Figure 5** shows the configuration file used to define for each application a topmost window management policy according to the present invention.

### Preferred embodiment of the invention

### INTRODUCTION

The preferred embodiment relies on all the Microsoft Windows ("Windows" is a trademark of Microsoft Corporation) operating system family. In a graphical Microsoft Windows-based application, a window is a rectangular area of the screen where an application displays output and receives input from the user. A window shares the screen with other windows, including windows from other applications. Only one window at a time, can receive input from the user. The user can use the mouse, the keyboard, or any other input device to interact with this window and the application that owns it. Microsoft's windows can be of different types (Overlapped, Pop-up, Child, Layered, Message Only). The various window types will not be described in detail in the present description. The most important principles to understand the problem that the present invention proposes to solve, are :
- the **"z-order notion**
- the **hook** mechanism

### The "Z-order" notion

The *z-order* of a window indicates the position of the window in a stack of overlapping windows. This window stack is oriented along an imaginary axis, the z-axis, extending outward from the screen. The window at the top of the z-order overlaps all other windows. The window at the bottom of the z-order is overlapped by all other windows.
The system maintains the z-order in a single list. The system adds windows to the z-order based on whether they are *topmost windows, top-level windows,* or *child windows.*
- *A topmost window* overlaps all other non-topmost windows, regardless of whether it is the active or foreground window. A topmost window has the WS EX TOPMOST style. All topmost windows appear in the z-order before any non-topmost window.
- *A top-level window* is a window with no parents except the main desktop window versus child windows belonging to a top level window.
- A child window is grouped with its parent in z-order.

### The hook mechanism

In the Microsoft Windows operating system, a hook is a mechanism by which a function can intercept events (messages, mouse actions, keystrokes) before they reach an application. The function can act on events and can, in some cases, modify or discard these events. Functions that receive events are called *filter functions* and are classified according to the type of event they intercept. For example, a filter function may want to receive all keyboard or mouse events. For Windows, the filter function must be installed " that is, attached " to a Windows hook (for example, to a keyboard hook) to be called. Attaching one or more filter functions to a hook is known as *setting* a hook. If a hook has more than one filter function attached, Windows maintains a chain of filter functions. The most recently installed function is at the beginning of the chain, and the least recently installed function is at the end.

The Microsoft Win32 ("Win32" is a trademark of Microsoft Corporation) Application Programming Interface (API) provides a set of functions to access, modify :
- the z-order list.
- the windows position and styles.
- the hook operating system mechanism.

### DESCRIPTION OF THE INVENTION

With the Microsoft Windows Operating system, all the graphical windows are messages driven. All the windows have at least one thread responsible to process messages received from the system (ex: user mouse events). This tread is called the WindowProc and it can send messages to any other windows/applications.

### Generic Process Workflow

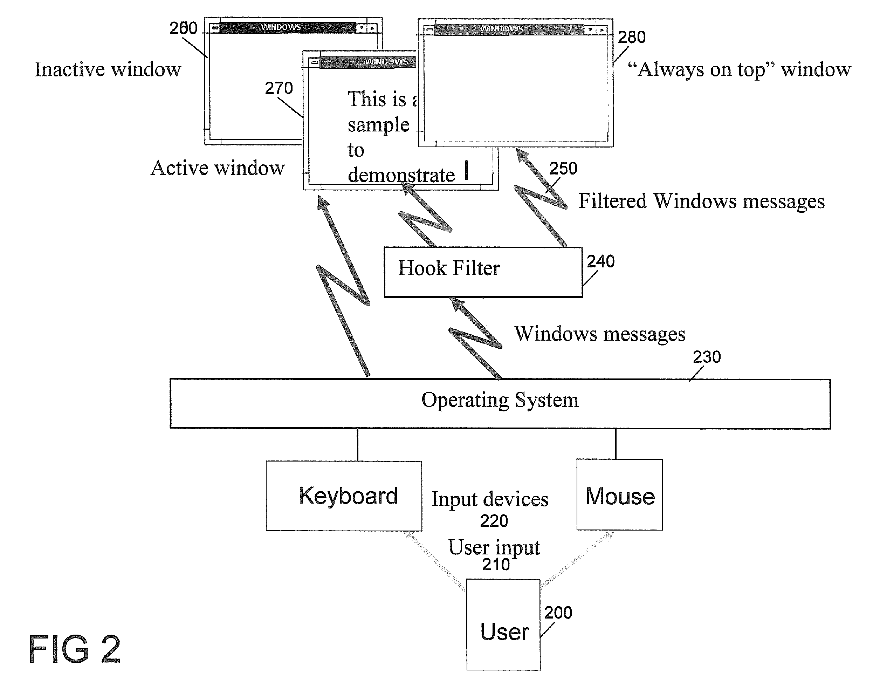

As illustrated in Figure 2, an *active window* **270** is defined as being the top-level window of the application with which the user is currently working. To easily identify the active window, the system places this window at the top of the z-order and changes the color of its title bar and border (blue window - **270)** Only a top-level window can be an active window. The others windows are inactive (black window - **260**). Only windows having the attribute topmost (red window - **280**) can overlap an active window (they are in the top z-order list).

A user **200** interacts with the active window (active one **―270**) using an input device **(220)** (the keyboard for example) for entering an input **210.** By typing onto the keyboard, the user sends inputs **250** to the active window through the Operating system **230.**

A filter daemon (Hook Filter **―240**) intercepts for example, all the messages coming from the keyboard and the mouse. For each message filtered, when the active window is partially overlapped by a topmost window (hiding the cursor position of an edit text area for example), the filter daemon automatically moves all the topmost windows (hiding a part of the client area of the current active window **270)** to the nearest position to maintain the active window totally visible (See Figure 2)

If such action is not possible due to the screen and windows size, then the filter minimises all topmost windows during the time the user interacts with the active window. When the active window becomes inactive, then the filter restores the topmost windows to its memorised initial position.

In term of implementation on the Windows Operation System, a daemon filter is a dynamic library registered as a hook filter at the system level using the Win32 API.

Each time an event occurs (ex: mouse click), the system calls the filter functions registered for this event family and sends to said filter functions the message.

### Microsoft Hook

Hooks mechanisms provide powerful capabilities for Windows-based applications. These applications can set a hook using several options :
- Process or modify all messages meant for all the dialogue boxes, message boxes, scroll bars, or menus for an application (WH_MSGFILTER).
- Process or modify all messages meant for all the dialogue boxes, message boxes, scroll bars, or menus for the system (WH_SYSMSGFILTER).
- Process or modify all messages (of any type) for the system whenever a **GetMessage** or a **PeekMessage** function is called (WH_GETMESSAGE).
- Process or modify all messages (of any type) whenever a **SendMessage** function is called (WH_CALLWNDPROC).
- Record or play back keyboard and mouse events (WH_JOURNALRECORD, WH_JOURNALPLAYBACK).
- Process, modify, or remove keyboard events (WH_KEYBOARD).
- Process, modify, or discard mouse events (WH_MOUSE).
- Respond to certain system actions, making it possible to develop computer-based training (CBT) for applications (WH_CBT).
- Prevent another filter from being called (WH_DEBUG).

Applications use hooks to:
- Provide F1 help key support to menus, dialogue boxes, and message boxes (WH_MSGFILTER).
- Provide mouse and keystroke record and playback features, often referred to as *macros.* For example, the Windows Recorder accessory program uses hooks to supply record and playback functionality (WH_JOURNALRECORD, WH_JOURNALPLAYBACK).
- Monitor messages to determine which messages are being sent to a particular window or which actions a message generates (WH_GETMESSAGE, WH_CALLWNDPROC). The Spy utility program in the Platform SDK uses hooks to perform these tasks. The source for Spy is available in the SDK.
- Simulate mouse and keyboard input (WH_JOURNALPLAYBACK). Hooks provide the only reliable way to simulate these activities. If you try to simulate these events by sending or posting messages, Windows internals do not update the keyboard or mouse state, which can lead to unexpected behaviour. If hooks are used to play back keyboard or mouse events, these events are processed exactly like real keyboard or mouse events. Microsoft Excel uses hooks to implement its SEND.KEYS macro function.
- Provide CBT for applications that run in the Windows environment (WH_CBT). The WH_CBT hook makes developing CBT applications much easier.

### Definitions and options used in the implementation of the invention

### Definitions

Working Area **(WA):** screen area where the user is currently working. The working area is part of the active window. It can be an area centred around the current cursor, with an offset in each direction, or it can be a child window of the active window, such as for instance a confirmation pop-up window. Anyway, a working area is delimited by its top left and bottom right corners, with respective coordinates (WAX1, WAY1) and (WAX2, WAY2).
Floating Window **(FW):** window in the foreground, possibly hiding part of the active window, such as the working area. This kind of window is also called Topmost window
Screen Event **(SE):** event resulting from the detection of a modification of the video buffer, resulting typically from a displacement of the cursor on the FW
Overlap Condition **(OC):** Boolean variable equal to False if and only if the WA and the Topmost window NP are disjoint.
Slip Direction **(SD):** variable specifying the direction offset along which a floating window FW is moved.
Normal Position **(NP):** variable specifying the regular position taken by a floating window FW on the screen
Escape Position **(EP):** variable specifying the position taken by a floating window FW if the overlap condition OC is true and if the floating window FW is not slipping.
Moved Window **(MW):** Boolean variable specifying, if equal to True, that the floating window FW does not stand in its normal position
Hidden Window **(HW):** Boolean variable specifying , if equal to True, that the floating window FW is hidden

### Options

Moveable (true / false): specifies if the working area WA can be moved
Slip (true/false) : when Moveable is equal to True, and if the overlap condition OC is equal to True, specifies if the floating window FW moves to a fixed position, or slips to a neighbour position along the direction slip direction SD

### Implementation

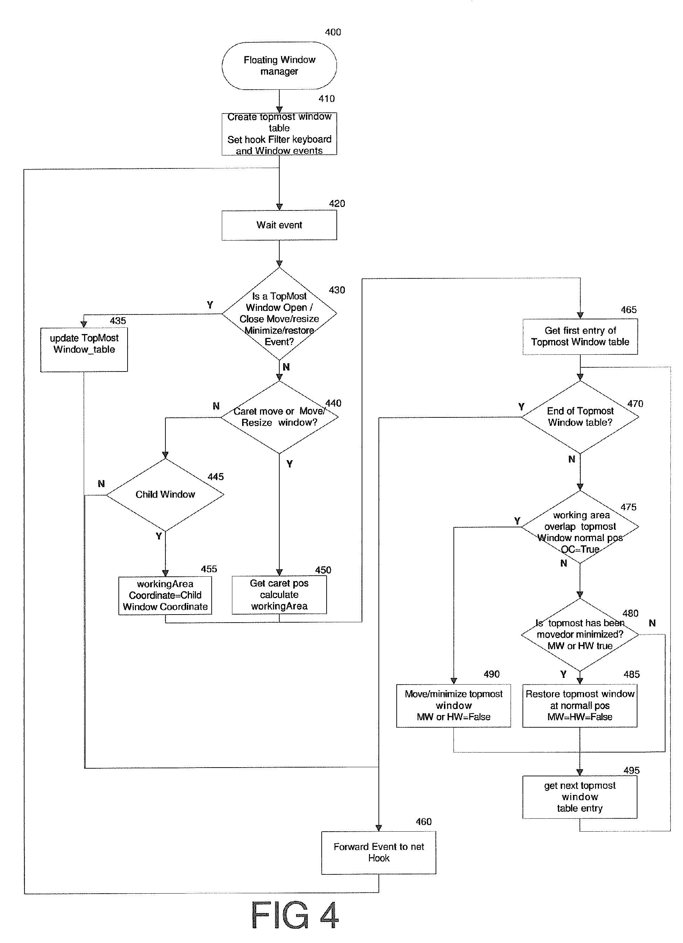

Figure 4 is a flow chart of the method according to the preferred embodiment of the invention. The floating window manager **400** is the application in charge to install and remove the proposed implementation.

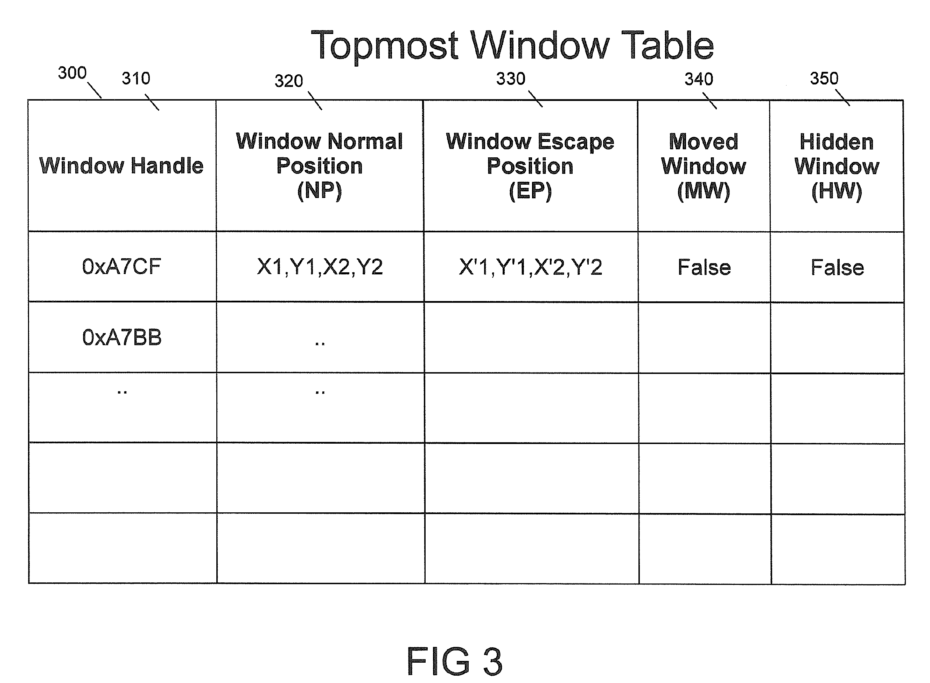

In the Microsoft Windows Operating System environment, a Hook Filter is a dynamic library registered at the system level. To set such filter, it is necessary to initialise and configure the Hook mechanism using the SetWindowsHook win32 API (Application Programming Interface). The same kind of action is needed to remove such filter from the system using the UnhookWindowsHook win32 API. During initialisation, a Topmost Window Table **300** is created. Said table is described in Figure 3. If multiple Topmost windows exist, then multiple entries are created in said Topmost Window Table **300,** one entry for each existing Topmost window. For each record in the table, the fields:
- "Window handle **310** (unique identifier for a window in the Win32 OS, used to communicate with said window), and
- initial window coordinate "Window Normal Position (NP) **320** are initialised.

The method illustrated in Figure 4 for managing a floating window on a computer screen, comprises the following steps:
- At step **410,** the setting the hook filter consists in registering a dynamic library exporting a callback function executed each time an event occurs. As previously described, a hook can be set up with different kinds of events (WH_KEYBOARD, WH_MOUSE,...)
   In this example, the hook filter is set both on the windows events and on the keyboard events (WH_KEYBOARD & WH_GETMESSAGE & WH_CALLWNDPROC). The hook filter is notified whenever a window is activated and/or a key is pressed on the keyboard.
- At step **420,** the Win32 operating system maintains a list of all the active hooks set up by applications. Each time an event occurs, the Win32 operating system lookups in this list to send the event message to all the callback functions registered for such type of event.
   The callback function is called with, as parameter, the event message, then the application code is executed.
   In the present invention, the code executed consists in tracking all topmost windows on top of the active window hiding either a part of the text edit zone or a child window of the active window (Eg: Save document dialogue box).
- At step **430,** when an event is received, an initial checking is done to identify if this event is either an initialisation, or a close, or a minimise, or a maximise, or a resize or a move of a Topmost window. If the received event is one of these events, then control is given to step **435,** otherwise control is given to step **440.**
- At step **435,** the Topmost Window Table **300** is updated.
- If the event is an **initialisation of a Topmost window,** a new entry is created in the Topmost Window Table **300** and the fields "Window Handle **310** and "Window Normal Position (NP) **320** are initialised.
- If the event is a **close of a topmost window** or if it is a minimise not requested by our process (when "Hidden Window (HW) field**350** is set to False), the corresponding entry in the Topmost Window Table **300** is removed,
- Finally if the event is a **move or resize of a topmost window,** the field "Window Normal Position (NP) **320** of the entry corresponding to this topmost window is updated to reflect the new position of said topmost window.
   Then control is given to step **460.**
- At step **440,** if the event received during the previous step **420** is not for a topmost window, a checking is performed to identify if the event is a **caret move.**
   If it is the case, then control is given to step **450,** otherwise control is given to step **445.**
- At step **445,** a test is performed to check if the event corresponds to the opening of a child window. If it is the case, then control is given to step **455;** otherwise control is given to step **460.**
- At step **450,** using the caret coordinates carried by the event, a Working Area (WA in short) coordinate is calculated. The working area WA is a rectangular area which is centred on the caret position. Said working area WA is represented by coordinates WAX1,WAY1,WAX2,WAY2 like any window, where WAX1, WAY1 are the coordinates of the up/left corner and where WAX2, WAY2 are the coordinates of the down/right corner. The values of WAX1, WAY1, WAX2, WAY2 are calculated by adding or subtracting an offset **DX** or **DY** to the caret coordinates CX, CY. So **WAX1=CX- DX, WAY1=CY- DY, WAX2=CX+DX, WAY2=CY+ DY.** Then control is given to step **465.**
- At step **455,** the working area coordinate are set equal to the coordinates of the child window, and then control is given to step **465.**
- At step **460,** the event is forwarded to the next hook or to the target application, and control is given back to step **420** in order to wait for the next-to-come event.
- At step **465,** the Topmost Window Table **500** is scanned to verify if the normal position (NP) of a topmost window which has been moved or minimised does not overlap the working area. The process of verification is initialised by getting the first entry of the Topmost Window Table **500.**
- At step **470,** a test if performed to check if the end of the Topmost Window Table **300** has been reached. If it is the case, then control is given to step **460,** otherwise control is given to step **475.**
- At step **475,** a test is performed to check if the working area overlaps the topmost area identified by the "Window Normal Position (NP) field**320**, If it is the case, then control is given to step **490;** otherwise control is given to step **480.**
- At step **480,** a test is performed to check if the topmost window has been previously moved. If it is the case, then control is given to step **485;** otherwise control is given to step **495.**
- At step **485,** the topmost window is moved back to its normal position, as specified by the "Window Normal Position (NP) field320. The "Moved Window (MW) field **340** is set to False. In an alternate embodiment, when the topmost window has been minimised, the move to the initial position is replaced by a restore window and the "Hidden Window (HW) field350 is set to False. Then control is given to step **495.**
- At step **490,** the Topmost window is moved to a new position with no overlapping with the working area WA. The "Moved Window (MW) field 340 is set equal to the value True. In an alternate embodiment, the topmost window is minimised instead of being moved if the "Hidden Window (HW) field350 is set to true.
   Then control is given to step **495.**
- At step **495,** the next Topmost Window Table **300** entry is pointed and the control is given back to step **470.**

### User interface and application policy

The present embodiment also offers the possibility to apply different topmost window management policy to application which launch the active window. There are at least two policies:
- 1. (CARET) The topmost window is moved to a new position relative to the cursor position (caret). This policy is very useful for test editors like Microsoft Word, Lotus Wordpro, Notepad or any other text editor.
- 2. (Window) The topmost window is moved out of the active window if there is enough space to keep the topmost window entirely visible. If there is not enough space to keep said topmost window entirely visible, the topmost window is minimised until space is cleared to allow the display of the topmost window. This policy is used by applications with a complex user interface comprising many input fields (for instance a CRM product like SIEBEL or a development platform such Eclipse packaged in WSAD by IBM).

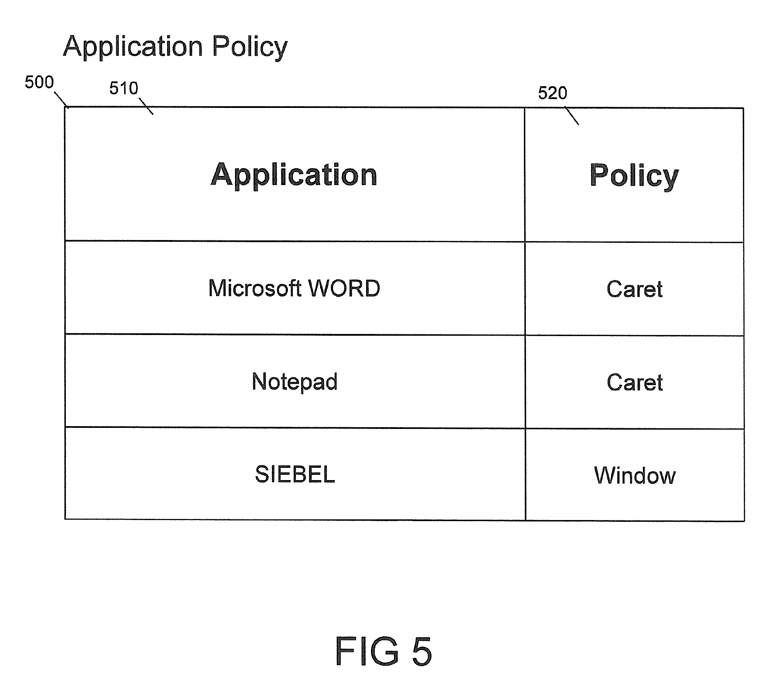

As shown in Figure 5, this capability is based on a user's defined list of applications **500** provided to the floating window manager in a configuration file. When a new window is created, the corresponding event is intercepted by the floating window manager. From the window, the floating window manager identifies the associated application **510** and applies the rule defined in the Policy field **520.**

While running this application, the user may launch another application using a floating window. The window associated to the new application is then handled by the floating window manager as described in the preferred embodiment of the invention which may apply appropriate policy to manage topmost window.

What has been described is merely illustrative of the application of the principles of the present invention. Other arrangements and methods can be implemented by those skilled in the art without departing from the spirit and scope of the present invention.

## Claims

1. A method for managing a floating window on a computer screen according to its relative position with an active window associated with a computer application, said method comprising the steps of:
• managing the floating window so that the active window remains totally or partially visible on the computer screen.

2. The method according to the preceding claim wherein the step of managing the floating window comprises the step of :
• moving the floating window when said floating window partially or totally hides the active window.

3. The method according to claim 1 wherein the step of managing the floating window comprises the step of :
• resizing the floating window when said floating window partially or totally hides the active window.

4. The method according to claim 1 wherein the step of managing the floating window comprises the steps of :
• hiding the floating window when said floating window partially or totally hides the active window.

5. The method according to any one of the preceding claims comprising the further step of :
• restoring the floating window to its initial size and/or position on the computer screen as soon as the floating window with its initial size and/or position does not partially or totally hides the active window any more.

6. The method according to any one of the preceding claims wherein the step of managing the floating window so that the active window remains totally or partially visible on the computer screen, comprises the step of :
• defining a part of the active window that must remain visible on the computer screen.

7. The method according to any one of the preceding claims wherein the step of managing the floating window so that the active window remains totally or partially visible on the computer screen, comprises the step of :
• managing the floating window so that the cursor of the application associated with the active window remains visible on the computer screen.

8. The method according to any one of the preceding claims wherein the step of managing the floating window so that the active window remains totally or partially visible on the computer screen, comprises the step of :
• managing the floating window so that the current user working area remains visible.

9. The method according to any one of the preceding claims wherein the step of managing the floating window so that the active window remains totally or partially visible on the computer screen, comprises the step of :
• managing the floating window so that user's inputs, particularly alphanumeric text, entered in the active window remains visible on the computer screen.

10. The method according to any one of the preceding claims wherein the step of managing the floating window, comprises the steps of :
• defining an overlap condition based on the relative position on the computer screen of the floating window and the active window;
• defining screen events and user input device events;
• associating a hook filter with each defined screen event;
• associating a hook filter with each defined user input device event;
• detecting by means of said hook filters the occurence of the overlap condition between the floating window and the active window;
• recording the initial position and/or size of the floating window;
• moving, or resizing, or hiding the floating window on the computer screen until the disappearance of said overlap condition.

11. The method according to the preceding claim wherein the step of managing the floating window, comprises the steps of :
• detecting by means of said hook filters, the disappearance of the overlap condition between the active window and the initial floating window;
• restoring the initial position and/or size of the floating window;
• displaying on the computer screen the floating window at its initial position and with its initial size.

12. The method according to claim 1 wherein the step of managing the floating window, comprises the steps of :
• moving or resizing or hiding the floating window depending on the application associated with the active window.

13. The method according to claim 1 wherein the step of managing the floating window, comprises the steps of :
• moving or resizing or hiding the floating window depending on the application associated with the floating window.

14. A system comprising means adapted for carrying out the steps of the method according to any one of the preceding claims.

15. A computer program comprising instructions for carrying out the steps of the method according to any one of claims 1 to 13 when said computer program is executed on a computer system.
